# EUROPEAN PATENT SPECIFICATION

(11) **EP 1 334 071 B1**
(45) Date of publication and mention of the grant of the patent: **09.03.2005**
(21) Application number: 01977008.0
(22) Date of filing: 18.10.2001
(51) Int. Cl.: C02F 1/00, B01D 37/04

(54) **A PLANT AND A METHOD FOR PURIFYING WATER AND A DEVICE FOR DETECTING ORGANIC COMPOUNDS**
ANLAGE UND VERFAHREN ZUR REINIGUNG VON WASSER UND VORRICHTUNG ZUM NACHWEIS ORGANISCHER VERBINDUNGEN
EQUIPEMENT ET PROCEDE POUR PURIFIER L'EAU AINSI QUE DISPOSITIF POUR DETECTER DES COMPOSES ORGANIQUES

(30) Priority: 23.10.2000 SE 0003820
(43) Date of publication of application: 13.08.2003
(73) Proprietor: Axelsson, Per, 733 91 Sala (SE)
(72) Inventor: Axelsson, Per, 733 91 Sala (SE)
(74) Representative: Reyier, Ann-Mari
(86) International application number: PCT/SE2001/002274
(87) International publication number: WO 2002/034674

(56) References cited:
- SE-C- 198 700
- US-A- 5 779 911

## Description

### TECHNICAL AREA

The present invention relates to a plant for purifying water contaminated with floating organic compounds, which comprises a first room arranged for receiving the contaminated water and for purifying the water from organic compounds.

Furthermore, the invention relates to a method for purifying water contaminated with floating organic compounds, whereby the contaminated water is purified in a first room.

The invention further relates to a device for detecting floating organic compounds which is adapted for connection to a device for purification of water contaminated with floating organic compounds.

### PRIOR ART

Different methods and devices for purifying water containing floating organic compounds are known. Usually, the purification devices comprise some kind of a filter. The contaminated water is purified by passing it through the filter, where the contamination remains. For example, in the Swedish patent document SE 511 731, a device for purification of contaminated water is shown, which device comprises a container containing a number of layers having an absorbent, which layers are arranged on top of each other. When the contaminated water is passed through the absorbent, the contamination is absorbed.

A problem in connection with purification devices using filters is that if a large discharge of contaminated water suddenly occurs, the filter does not keep up with taking care of all contamination, and there is a risk for remaining compounds in the purified water. If, for instance, a large accident occurs, the filter may soon be saturated which might result in contamination coming with the purified water. Another occasion when this problem might occur is when the filter has not been changed in time and for that reason is saturated. From an environmental point of view, it is, of course, very inappropriate to discharge water with organic contamination, for example petrol, oil, and organic solvents into the environment.

### SUMMARY OF THE INVENTION

The object of the invention is to show a plant for purifying water contaminated with floating organic compounds which reduces the risk for floating organic compounds coming with the purified water even though the filter is saturated or at large discharge of contamination.

This object is achieved by the initially mentioned plant characterized in that it further comprises means for transferring the purified water from the first room to a second room, which is arranged so that possibly remaining floating organic compounds are separated from the water and which contains a detector member for detecting said remaining organic compounds, and an outlet member designed so that it discharges the water but keeps said organic compounds in the second room, and an alarm device generating an alarm signal when the detector member indicates that there are organic compounds in the second room. With such a plant, an alert is obtained, if there are still compounds remaining in the water after the purification. An operator can then change the filter, if it is saturated, or undertake any other measure for restoring the purification device to its normal function. The separation of the water and the contamination makes it possible to keep the contamination in the second room at the same time as the purified water is discharged. Thanks to this, it is prevented that any contamination will be discharged from the purifying plant, even though it takes a while before it is turned off and action is taken to solve the problems. The invention is particularly suitable, for instance within a ground water protection area where there is a risk for high organic compound discharge levels exceeding the absorption capacity of the filter.

According to an embodiment of the invention, it comprises a valve member arranged such that it turns off the transfer between the first and the second room when the detector member indicates that there are organic compounds in the second room. This arrangement makes an automatic shut-off of the transportation of purified water from the purification device possible, when the purification does not work satisfactorily. In another embodiment, the valve member may, of course, be arranged for shutting off the flow of water in another part of the plant. For example, the valve may be arranged for shutting off the supply of contaminated water to the first room or the transportation of water from the second room.

According to another embodiment of the invention, the second room comprises a wall element that divides the room in two parts, said detector member being arranged in one part of the room and said valve member being arranged in the other part of the room. The second room may suitably be a well in the ground. In such an embodiment, it is advantageous from the maintenance point of view if the member is arranged such that it can be easily reached. By arranging the valve member in a divided space in the second room, the valve member can be easily reached.

According to a further embodiment of the invention, the second room comprises an outlet opening and the outlet member comprises a tubular part arranged in the second room, one end of the tubular being located below and at a distance from the outlet opening and the other end being located at the outlet opening. Preferably, the vertical distance between one end of the tubular part and the outlet opening is more than 0.03 m. By such an arrangement, the water can be discharged, while the organic compounds floating on the water remain in the second room, at the same time as the water level is kept constant in the room.

According to a further embodiment, the second room comprises an inlet opening and an outlet opening, which are arranged at essentially the same height. By arranging the inlet and the outlet opening at the same height, a calm water flow is achieved in the room, which is a condition for the water and the organic compounds to separate from each other. If turbulence occurs in the room, the organic compounds and the water are mixed.

According to another embodiment of the invention, the inlet opening and the outlet opening have essentially the same cross-sectional area. This makes the water flow to the room equal to the flow out from the room. Thus, it is further ensured that no turbulence occurs in the room and that the organic compounds are given a possibility to rise to the surface.

In an embodiment of the invention, the detector member is arranged floating on the water surface. It is unavoidable that the level of the water surface sometimes fluctuates. Then it is advantageous if the detector member floats, since otherwise there is a risk that the detector will be destroyed when it is drowned by the water.

In a further embodiment of the invention, the alarm device comprises means for transmitting the alarm signal to a cellular telephone. This is advantageous, since the operator accordingly can be reached by an alert irrespectively of where he is and he can then quickly move to the purifying plant and remedy the problem.

Another object of the invention is to show a device for detecting floating organic compounds, which is adapted for connection to a device for purification of water contaminated with floating organic compounds and which gives an alert if the contaminated water from the purification device still contains contamination.

This object is achieved, by a device characterized in that it is arranged for receiving purified water from the purification device to a room which is arranged such that possibly remaining floating organic compounds are separated from the water and which contains a detector member for detecting organic compounds, and an outlet member which is shaped so that it discharges the water but keeps said organic compounds, and the device comprises an alarm device generating an alarm signal when the detector member indicates that there are organic compounds in the room.

Another object of the invention is to show a method for purifying water contaminated with floating organic compounds, which method minimizes the risk for the purified water to contain remainders of the organic compounds.

This object is achieved by the contaminated water first being purified in a first room and then being transferred to a second room, in which possible remaining floating organic compounds are allowed to separate from the water, whereupon the water is diverted from the second room and said remaining organic compounds are kept, whereby it is detected in the second room whether there are any floating organic compounds in the water, and if so, an alarm signal is generated.

### DESCRIPTION OF DRAWINGS

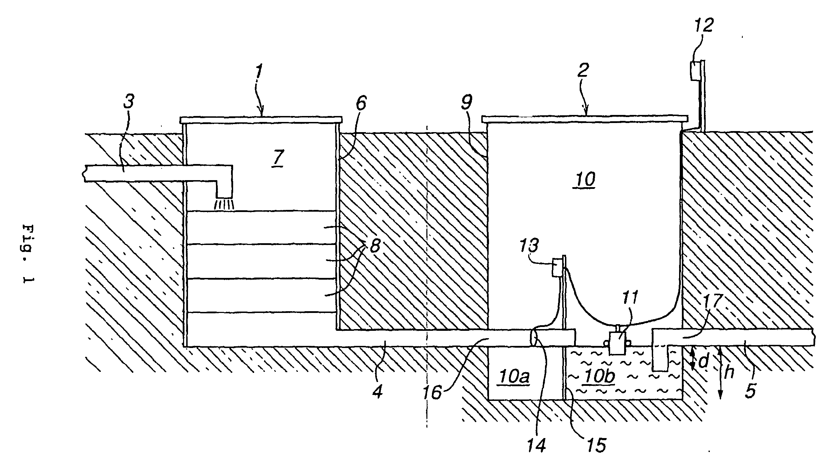

An embodiment of a plant according to the invention shall hereafter be described supported by the appended figure showing a plant for purifying water according to the invention.

### DESCRIPTION OF EMBODIMENTS

The figure shows a plant for purifying water, which comprises a purification device 1, a detection device 2, and a first piping 3 for supplying the water to be purified to the purification device, a second piping 4 for transferring the purified water from the purification device to the detection device, and a third piping 5 for further transportation of the water from the detection device. The water to be purified is contaminated with floating organic compounds, such as different types of oils, diesel oil, petrol, and organic solvents. The purification device 1 comprises a first container 6 which surrounds a first room 7, which comprises a number of layers 8, each comprising a filter mass. The filter mass consists of an absorbing material, for example peat, which is able to absorb the organic compounds.

The detection device 2 comprises a second container 9, surrounding a second room 10, which comprises a detector 11 detecting whether there are any organic compounds in the water. The detector in this embodiment is of a type measuring the conductivity in the water surface and from the measured conductivity, it is decided whether there are any floating organic compounds on the water surface. Pure water is conductive, but oil, for example, is not conductive. The detector member is floating on the water surface and accordingly goes with the water level should the water level change. Thus, there is no risk that the electronics in the detector member are destroyed by the water if the water level is raised in the container. In another embodiment of the invention, the detector may for example be a gas chronomatograph detecting the content of organic gases in the well, or an electrochemical detector detecting chemically. If the detector is not arranged to float, a floating switch may be installed in the second room. The floating switch is connected to a valve, which turns off the water supply, if the water level is above the detector level.

The detector 11 is connected to an alarm device 12 generating an alarm signal when the detector 11 has detected whether there are organic compounds in the second room 10. The alarm signal may be a visible signal, a sound signal, or an electrical signal, which, for example, is transmitted to a cellular telephone. The alarm device 12 is preferably arranged outside the second container 9. The detector 11 is also connected to a control system 13, controlling a valve 14, which is arranged for regulating the water flow between the purification device and the detector device. The control system is arranged so that it shuts the valve 14 when the detector has detected that there are organic compounds in the water, whereby the water supply to the room 10 is closed. Accordingly, it is prevented that further contamination enters into the room 10.

It is practical to provide the purification device and the detector device in the ground as shown in the figure. The container 9 is in this embodiment a well and has a wall element 15 dividing the room 10 in two parts, 10a and 10b. One part 10a is passed through by the second piping 4 and contains no water. The second piping 4 ends in the second part 10b, which consequently contains water. The valve 14 is arranged in the part 10a and the detector 11 is arranged in the other part 10b. When the plant is provided in the ground, as in this embodiment, it is advantageous to arrange the valve 14 in a space of its own in the container 9, so that it is easy to reach for maintenance.

The container comprises an inlet opening 16, through which the second piping 4 extends, and an outlet opening 17, to which the third piping 5 is connected. The distance h between the bottom of the container and the outlet opening 17 varies between 0.3-0.5 m. The water-filled part 10b of the room 10 constitutes a divider for water and floating organic compounds. That is the reason why it so important that the room is designed so that as little turbulence as possible occurs in the water. To prevent unnecessary movements in the water, the inlet opening 16 and the outlet opening 17 are arranged at the same height in the container 9 and with the same diameter. The organic compounds are separated from the water by rising upwards and settling on the water.

For diverting the water away but not the organic compounds, the detector device comprises a tubular outlet member 18 having an inlet arranged at a distance from and below the water surface in the space 10b and an outlet at the same level as the water surface and connected to the outlet opening 17. The distance d between the inlet and the water surface should be at least 0.03 m, but preferably the distance is approximately 0.2 m.

In this embodiment, the purification device 1 and the detector device 2 constitute two separate units which are possible to connect in series. This is advantageously, since they can be sold separately, which means that the purification device can be installed first and later supplemented by a detector device at a later occasion. In another embodiment, the purification device and the detector device may form an integrated unit.

The plant works such that the water to be purified is transferred to the purification device 1 through the piping 3 and in the purification device the water passes through the layers 8 with filter mass, and the organic compounds are absorbed. The purified water is then transferred through the piping 4 to the second part 10b of the room 10 in the detector device 2. From there, the water is taken away from the purifying plant via the outlet member 18 and the piping 5. If the filter mass is fully saturated, or if a discharge of organic compounds large enough to exceed the absorption capacity of the filter occurs, the organic compounds will go with the water from the purification device to the detector device 2.

Thanks to the design of the second part 10b of the room 10, the organic compounds are separated from the water by rising to the surface. The design of the outlet member, with an inlet being placed below the water surface and an outlet being placed at the water surface, results in the separated water being removed from the room 10 while the organic compounds remain. When the detector member 11 has detected that there are organic compounds at the water surface, it sends one signal to the alarm device 12 and one signal to the control system 13, which then immediately executes a closing of the valve 14, thereby preventing new water from entering into the room 10.

The invention may, of course, be varied within the frame of the appended claims.

## Claims

1. A plant for purifying water contaminated with floating organic compounds, which comprises a first room (7) arranged for receiving the contaminated water and for purifying the water from said organic compounds, **characterized in that** the plant further comprises means (4) for transferring the purified water from the first room (13) to a second room (10), which is arranged so that possibly remaining floating organic compounds are separated from the water and which contains a detector member (11) for detecting said remaining organic compounds, and an outlet member (18) designed so that it discharges the water but keeps said organic compounds in the second room (10), and an alarm device (12) generating an alarm signal when the detector member (11) indicates that there are organic compounds in the second room (10).

2. A plant according to claim 1, **characterized in that** it comprises a valve member (14) arranged so that it turns off the transfer between the first (7) and the second (10) room when the detector member (11) indicates that there are organic compounds in the second room (10).

3. Plant according to claim 2, **characterized in that** the second room (10) comprises a wall element (15) that divides the room in two parts, said detector member (11) being arranged in one part (10a) of the room and said valve member (14) being arranged in the other part (10b) of the room.

4. Plant according to any of the preceding claims, **characterized in that** said second room (10) comprises an outlet opening (17) and **in that** the outlet member comprises a tubular part arranged in the second room (10), one end of the tubular part being placed below and at a distance from the outlet opening (17) and the other end being placed at the outlet opening.

5. Plant according to claim 4, **characterized in that** the vertical distance between one end of the tubular part (18) and the outlet opening (17) is more than 0,03 m.

6. Plant according to any of the preceding claims, **characterized in that** the second room (10) comprises an inlet opening (16) and an outlet opening (17), which are arranged at essentially the same height.

7. Plant according to claim 6, **characterized in that** the inlet opening (16) and the outlet opening (17) have essentially the same cross-sectional area.

8. Plant according to any of the preceding claims, **characterized in that** the first (7) and the second (10) room are shaped as separate units.

9. Plant according to any of the preceding claims, **characterized in that** the detector member (11) is arranged floating on the water surface.

10. Plant according to any of the preceding claims, **characterized in that** alarm device (12) comprises means for transmitting the alarm signal to a cellular telephone.

11. Device for detecting floating organic compounds, which is adapted for connection to a device (1) for purifying water contaminated with floating organic compounds, **characterized in that** it is arranged for receiving purified water from the purification device (1) to a room (10), which is arranged such that possibly remaining floating organic compounds are separated from the water and which contains a detector member (11) for detecting organic compounds, and an outlet member (18), which is designed so that it discharges the water but keeps said organic compounds, and the device comprises an alarm device (12) generating an alarm signal when the detector member (11) indicates that there are organic compounds in the room.

12. Device according to claim 11, **characterized in that** it comprises a valve member (14) arranged so that it stops the receiving of water from the purification device (1) when the detector member indicates that there are organic compounds in the room (10).

13. Device according to any of the claims 11 and 12, **characterized in that** said room (10) comprises an outlet opening (17) and **in that** the outlet member comprises a tubular part (18) arranged in the room (10), one end of the tubular part being arranged below and at a distance from the outlet opening (17) and the other end being placed at the outlet opening.

14. Device according to any of the claims 11-13. **characterized in that** said room comprises an inlet opening (16) and an outlet opening (17), which are arranged at essentially the same height and have essentially the same cross-sectional area.

15. A method for purifying water contaminated with floating organic compounds, whereby the contaminated water firstly is purified in a first room (17) and thereafter is transferred to a second room (10) in which possibly remaining floating organic compounds are allowed to separate from the water, whereupon the water is diverted from the second room (10) and said remaining organic compounds are kept, whereby it is detected in the second room whether there are any floating organic compounds in the water and if so, an alarm signal is generated.

16. A method according to claim 15, whereby if it is detected that there are organic compounds in the second room said transferal between the first (7) and the second (10) room is turned off.

17. A method according to any of the claims 15 and 16, whereby the alarm signal is transmitted to a cellular telephone.

18. A method according to any of the claims 15-17, whereby the water is purified in the first room by filtering.

## Patentansprüche

1. Anlage zur Reinigung von mit schwimmenden organischen Verbindungen verunreinigtem Wasser, die einen ersten Raum (7) enthält, der zum Aufnehmen des verunreinigten Wassers und zum Reinigen des Wassers von den organischen Verbindungen ausgelegt ist, **dadurch gekennzeichnet, dass** die Anlage ferner eine Einrichtung (4) zum Überleiten des gereinigten Wassers aus dem ersten Raum (7) in einen zweiten Raum (10) enthält, der so angeordnet ist, dass möglicherweise verbleibende schwimmende organische Verbindungen von dem Wasser getrennt werden und der ein Detektorelement (11) zum Erfassen der verbleibenden organischen Verbindungen sowie ein Auslasselement (18), das so konstruiert ist, dass es das Wasser abgibt, jedoch die organischen Verbindungen in dem zweiten Raum (10) hält, sowie eine Alarmeinrichtung (12) enthält, die ein Alarmsignal erzeugt, wenn das Detektorelement (11) anzeigt, dass organische Verbindungen in dem zweiten Raum (10) sind.

2. Anlage nach Anspruch 1, **dadurch gekennzeichnet, dass** sie ein Ventilelement (14) enthält, das so angeordnet ist, dass es die Überleitung zwischen dem ersten (7) und dem zweiten (10) Raum unterbricht, wenn das Detektorelement (11) anzeigt, dass organische Verbindungen in dem zweiten Raum (10) sind.

3. Anlage nach Anspruch 2, **dadurch gekennzeichnet, dass** der zweite Raum (10) ein Wandelement (15) enthält, das den Raum in zwei Teile unterteilt, wobei das Detektorelement (11) in einem Teil (10a) des Raumes angeordnet ist und das Ventilelement (14) in dem anderen Teil (10b) des Raumes angeordnet ist.

4. Anlage nach einem der vorstehenden Ansprüche, **dadurch gekennzeichnet, dass** der zweite Raum (10) eine Auslassöffnung (17) enthält, und dadurch, dass das Auslasselement ein in dem zweiten Raum (10) angeordnetes rohrförmiges Teil enthält, wobei ein Ende des rohrförmigen Teils unter der Auslassöffnung (17) und von dieser beabstandet platziert ist und das andere Ende an der Auslassöffnung platziert ist.

5. Anlage nach Anspruch 4, **dadurch gekennzeichnet, dass** der vertikale Abstand zwischen einem Ende des rohrförmigen Teils (18) und der Auslassöffnung (17) mehr als 0,03 m beträgt.

6. Anlage nach einem der vorstehenden Ansprüche, **dadurch gekennzeichnet, dass** der zweite Raum (10) eine Einlassöffnung (16) und eine Auslassöffnung (17) enthält, die im wesentlichen auf der gleichen Höhe angeordnet sind.

7. Anlage nach Anspruch 6, **dadurch gekennzeichnet, dass** die Einlassöffnung (16) und die Auslassöffnung (17) im wesentlichen die gleiche Querschnittsfläche haben.

8. Anlage nach einem der vorstehenden Ansprüche, **dadurch gekennzeichnet, dass** der erste (7) und der zweite (10) Raum als getrennte Einheiten geformt sind.

9. Anlage nach einem der vorstehenden Ansprüche, **dadurch gekennzeichnet, dass** das Detektorelement (11) auf der Wasseroberfläche schwimmend angeordnet ist.

10. Anlage nach einem der vorstehenden Ansprüche, **dadurch gekennzeichnet, dass** die Alarmeinrichtung (12) eine Einrichtung zum Übertragen des Alarmsignals zu einem Mobiltelefon enthält.

11. Vorrichtung zum Erfassen von schwimmenden organischen Verbindungen, die zur Verbindung mit einer Vorrichtung (1) zur Reinigung von mit schwimmenden organischen Verbindungen verunreinigtem Wasser verbunden ist, **dadurch gekennzeichnet, dass** sie zum Empfangen von gereinigtem Wasser von der Reinigungsvorrichtung (1) in einem Raum (10) ausgelegt ist, der so angeordnet ist, dass möglicherweise verbleibende schwimmende organische Verbindungen von dem Wasser getrennt werden, und der ein Detektorelement (11) zum Erfassen von organischen Verbindungen enthält sowie ein Auslasselement (18), das so konstruiert ist, dass es das Wasser abgibt, jedoch die organischen Verbindungen zurückhält, und die Vorrichtung eine Alarmeinrichtung (12) enthält, die ein Alarmsignal erzeugt, wenn das Detektorelement (11) anzeigt, dass organische Verbindungen in dem Raum sind.

12. Vorrichtung nach Anspruch 11, **dadurch gekennzeichnet, dass** sie ein Ventilelement (14) enthält, das so angeordnet ist, dass es die Aufnahme von Wasser von der Reinigungsvorrichtung (1) unterbricht, wenn das Detektorelement anzeigt, dass organische Verbindungen in dem Raum (10) sind.

13. Vorrichtung nach einem der Ansprüche 11 und 12, **dadurch gekennzeichnet, dass** der Raum (10) eine Auslassöffnung (17) aufweist, und dadurch, dass das Auslasselement ein in dem Raum (10) angeordnetes rohrförmiges Teil (18) enthält, wobei ein Ende des rohrförmigen Teils unter der Auslassöffnung (17) und von dieser beabstandet platziert ist und das andere Ende an der Auslassöffnung platziert ist.

14. Vorrichtung nach einem der Ansprüche 11 bis 13, **dadurch gekennzeichnet, dass** der Raum eine Einlassöffnung (16) und eine Auslassöffnung (17) enthält, die im wesentlichen auf der gleichen Höhe angeordnet sind und im wesentlichen die gleiche Querschnittsfläche haben.

15. Verfahren zur Reinigung von mit schwimmenden organischen Verbindungen verunreinigtem Wasser, bei welchem das verunreinigte Wasser zuerst in einem ersten Raum (7) gereinigt wird und anschließend in einen zweiten Raum (10) übergeleitet wird, in dem sich möglicherweise verbleibende schwimmende organische Verbindungen von dem Wasser trennen können, woraufhin das Wasser aus dem zweiten Raum (10) abgeleitet wird und die verbleibenden organischen Verbindungen zurückgehalten werden, wobei in dem zweiten Raum erfasst wird, ob schwimmende organische Verbindungen in dem Wasser vorhanden sind, und wenn dies der Fall ist, ein Alarmsignal erzeugt wird.

16. Verfahren nach Anspruch 15, bei welchem dann, wenn erfasst wird, dass organische Verbindungen in dem zweiten Raum vorhanden sind, die Überleitung zwischen dem ersten (7) und dem zweiten (10) Raum unterbrochen wird.

17. Verfahren nach einem der Ansprüche 15 und 16, bei welchem das Alarmsignal zu einem Mobiltelefon übertragen wird.

18. Verfahren nach einem der Ansprüche 15 bis 17, bei welchem das Wasser in dem ersten Raum durch Filtration gereinigt wird.

## Revendications

1. Installation pour purifier de l'eau contaminée par des composés organiques flottants, qui comprend une première chambre (7) agencée pour recevoir l'eau contaminée et pour purifier l'eau desdits composés organiques, **caractérisée par le fait que** l'installation comprend en outre un moyen (4) pour transférer l'eau purifiée de la première chambre (7) à une seconde chambre (10), qui est agencée de telle sorte que les composés organiques flottants restant éventuellement soient séparés de l'eau et qui contient un élément détecteur (11) pour détecter lesdits composés organiques restants, et un élément de sortie (18) agencé de telle sorte qu'il évacue l'eau mais retient lesdits composés organiques dans la seconde chambre (10), et un dispositif d'alarme (12) générant un signal d'alarme lorsque l'élément détecteur (11) indique qu'il y a des composés organiques dans la seconde chambre (10).

2. Installation selon la revendication 1, **caractérisée par le fait qu'**elle comprend un élément de soupape (14) disposé de telle sorte qu'il coupe le transfert entre la première (7) et la seconde (10) chambre lorsque l'élément détecteur (11) indique qu'il y a des composés organiques dans la seconde chambre (10).

3. Installation selon la revendication 2, **caractérisée par le fait que** la seconde chambre (10) comprend un élément de paroi (15) qui divise la chambre en deux parties, ledit élément détecteur (11) étant disposé dans l'une (10a) des parties de la chambre et ledit élément de soupape (14) étant disposé dans l'autre partie (10b) de la chambre.

4. Installation selon l'une quelconque des revendications précédentes, **caractérisée par le fait que** ladite seconde chambre (10) comprend une ouverture de sortie (17) et **par le fait que** l'élément de sortie comprend une partie tubulaire disposée dans la seconde chambre (10), l'une des extrémités de la partie tubulaire étant placée au-dessous et à une distance de l'ouverture de sortie (17) et l'autre extrémité étant placée au niveau de l'ouverture de sortie.

5. Installation selon la revendication 4, **caractérisée par le fait que** la distance verticale entre l'une des extrémités de la partie tubulaire (18) et l'ouverture de sortie (17) est de plus de 0,03 m.

6. Installation selon l'une quelconque des revendications précédentes, **caractérisée par le fait que** la seconde chambre (10) comprend une ouverture d'entrée (16) et une ouverture de sortie (17), qui sont disposées sensiblement à la même hauteur.

7. Installation selon la revendication 6, **caractérisée par le fait que** l'ouverture d'entrée (16) et l'ouverture de sortie (17) ont sensiblement la même surface en coupe transversale.

8. Installation selon l'une quelconque des revendications précédentes, **caractérisée par le fait que** la première (7) et la seconde (10) chambre sont configurées en tant qu'unités séparées.

9. Installation selon l'une quelconque des revendications précédentes, **caractérisée par le fait que** l'élément détecteur (11) est disposé flottant sur la surface de l'eau.

10. Installation selon l'une quelconque des revendications précédentes, **caractérisée par le fait que** le dispositif d'alarme (12) comprend un moyen pour transmettre le signal d'alarme à un téléphone cellulaire.

11. Dispositif pour détecter les composés organiques flottants, qui est adapté en vue de la connexion à un dispositif (1) pour purifier de l'eau contaminée par des composés organiques flottants, **caractérisé par le fait qu'**il est agencé pour recevoir de l'eau purifiée du dispositif de purification (1) à une chambre (10), qui est agencée de telle sorte que les composés organiques flottants restant éventuellement sont séparés de l'eau et qui contient un élément détecteur (11) pour détecter les composés organiques, et un élément de sortie (18), qui est agencé de telle sorte qu'il évacue l'eau mais retient lesdits composés organiques, et le dispositif comprend un dispositif d'alarme (12) générant un signal d'alarme lorsque l'élément détecteur (11) indique qu'il y a des composés organiques dans la chambre.

12. Dispositif selon la revendication 11, **caractérisé par le fait qu'**il comprend un élément de soupape (14) agencé de telle sorte qu'il arrête la réception de l'eau à partir du dispositif de purification (1) lorsque l'élément détecteur indique qu'il y a des composés organiques dans la chambre (10).

13. Dispositif selon l'une quelconque des revendications 11 et 12, **caractérisé par le fait que** ladite chambre (10) comprend une ouverture de sortie (17) et **par le fait que** l'élément de sortie comprend une partie tubulaire (18) disposée dans la chambre (10), l'une des extrémités de la partie tubulaire étant disposée au-dessous et à une distance de l'ouverture de sortie (17) et l'autre extrémité étant placée au niveau de l'ouverture de sortie.

14. Dispositif selon l'une quelconque des revendications 11 à 13, **caractérisé par le fait que** ladite chambre comprend une ouverture d'entrée (16) et une ouverture de sortie (17), qui sont disposées sensiblement à la même hauteur et ont sensiblement la même surface en coupe transversale.

15. Procédé de purification de l'eau contaminée par des composés organiques flottants, suivant lequel l'eau contaminée est tout d'abord purifiée dans une première chambre (7) et est par la suite transférée dans une seconde chambre (10) dans laquelle les composés organiques flottants restant éventuellement sont amenés à se séparer de l'eau, sur quoi l'eau est détournée de la seconde chambre (10) et lesdits composés organiques restants sont retenus, ce par quoi il est détecté dans la seconde chambre si ou non il y a des composés organiques flottants dans l'eau, et, dans l'affirmative, un signal d'alarme est généré.

16. Procédé selon la revendication 15, dans lequel s'il est détecté qu'il y a des composés organiques dans la seconde chambre, ledit transfert entre la première (7) et la seconde (10) chambre est coupé.

17. Procédé selon l'une quelconque des revendications 15 et 16, suivant lequel le signal d'alarme est transmis à un téléphone cellulaire.

18. Procédé selon l'une quelconque des revendications 15 à 17, suivant lequel l'eau est purifiée dans la première chambre par filtration.
